# EUROPEAN PATENT APPLICATION

(11) **EP 4 686 518 A1**
(43) Date of publication of application: **04.02.2026**
(21) Application number: 25174386.0
(22) Date of filing: 06.05.2025
(51) Int. Cl.: B23B 27/10, B23B 29/24, B23B 1/00, B23Q 11/10, B23B 27/08, B23B 29/04

(54) **HOLDER, CUTTING TOOL AND MACHINING METHOD**

(30) Priority: 30.07.2024 JP 2024123643
(71) Applicant: Tungaloy Corporation, Iwaki-shi, Fukushima 970-1144 (JP)
(72) Inventor: MIYAZAWA, Shunsuke, Fukushima, 9701144 (JP)
(74) Representative: Vossius & Partner Patentanwälte Rechtsanwälte mbB

(57) **Abstract**

A holder (20), a cutting tool (10) and a machining method that allow coolant to be smoothly supplied to a machining location of a workpiece are provided. A holder (20) for a cutting tool comprises: a plurality of mounting parts (22a, 22b, 22c) each of which is mounted with a cartridge (60A, 60B, 60C) that holds a cutting insert (61A, 61B, 61C); and a coolant flow path (41a, 41b, 41c, 42a, 42b, 42c) that is opened in each mounting part.

## Description

### Background

### Field

The present invention relates to a holder, a cutting tool and a machining method.

### Description of Related Art

JP2005-537143 A and JP2005-512823 A each disclose, as a tool for turning, a cutting tool in which a cartridge holding a cutting insert is mounted on a holder. In this cutting tool, cartridges can concurrently be mounted on a plurality of mounting parts provided in a holder.

In a cutting tool, it is required that coolant be supplied to a machining location of a workpiece to thereby cool and lubricate such machining location. Thus, when a workpiece is machined with the cutting tool disclosed in either JP2005-537143 A or JP2005-512823 A, coolant needs to be supplied from the outside to a machining location of the workpiece.

Further, even if a holder for a cutting tool is provided with a flow path for supplying coolant, it is difficult to provide a discharge port for the coolant so as to be close to a cutting insert. Thus, it is difficult to supply coolant as appropriate to a machining location of a workpiece with a cutting insert.

### Summary

The present invention has been made in light of the above-described circumstances, and an object of the present invention is to provide a holder, a cutting tool and a machining method that allow coolant to be smoothly supplied to a machining location of a workpiece.

A holder according to an aspect of the present invention is a holder for a cutting tool, the holder comprising: a plurality of mounting parts each of which is mounted with a cartridge that holds a cutting insert; and a coolant flow path that is opened in at least one mounting part.

The holder having the above-described structure has the coolant flow path that is opened in the mounting part. Thus, mounting, on the mounting part, a cartridge having an inner flow path that is opened close to the cutting insert, allows the coolant flow path to communicate with the inner flow path of the cartridge. Accordingly, coolant can be smoothly supplied to a machining location of a workpiece with the cutting insert via the inner flow path, whereby such machining location can be cooled and lubricated, and this allows the tool life to be prolonged.

Further, the cartridge that holds the cutting insert comprises the plurality of mounting parts each of which is mounted with the cartridge. Thus, by attaching the cartridge to each of the mounting parts, a plurality of types of cutting inserts can be collectively arranged on the single holder, and this can reduce a tool exchange period (non-cutting period) during machining. Further, even in a case where any of the cartridges is damaged, it is sufficient for only the damaged cartridge to be replaced, which is excellent in terms of economic efficiency.

In a front view, the plurality of mounting parts may be arranged at point symmetric positions.

At least two coolant flow paths that are opened in at least one mounting part may be provided

Two coolant paths may branch off from one introduction flow path, and branch positions of the two coolant flow paths with respect to the introduction flow path may be in different positions in an axial direction of the introduction flow path.

The two coolant flow paths that branch off from the introduction flow path may be opened in the mounting parts that are adjacent from each other.

Two coolant flow paths may be provided for each of the plurality of mounting parts.

One of the two coolant flow paths may be a rake surface flow path that is opened on a rake surface side of a cutting edge of the cutting insert and that communicates with an inner flow path of the cartridge.

The other of the two coolant flow paths may be a flank flow path which is opened on a flank side of a cutting edge of the cutting insert and which communicates with an inner flow path of the cartridge.

An adjustment mechanism that is capable of adjusting coolant flow rates of the rake surface flow path and the flank flow path may be provided.

A cutting tool according to an aspect of the present invention is a cutting tool comprising: the above-described holder; and a cartridge which holds a cutting insert and is mounted on the mounting part of the holder, wherein the cartridge has an inner flow path which is opened close to the cutting insert and which the coolant flow path communicates with in a state where the cartridge is mounted on the mounting part.

A machining method according to an aspect of the present invention is a machining method with a cutting tool comprising: a cartridge that holds a cutting insert; and a holder that has: a plurality of mounting parts each of which is mounted with the cartridge; and a coolant flow path that is opened in at least one mounting part, the holder being attached to a machine tool, the machining method comprising: a first step of arranging at least two types of cutting inserts with respect to the mounting parts; a second step of machining a workpiece under rotation with a first type of cutting insert; a third step of rotating the holder around a central axis thereof by a predetermined angle and thereby positioning the holder at a position regarding which a cutting insert of a type differing from the first type is used for machining; and a fourth step of machining the workpiece with the cutting insert of a type differing from the first type.

In the first step, different types of cutting inserts may be respectively arranged for the mounting parts.

The cartridge may have an inner flow path, and a discharge port of the inner flow path may be opened toward a cutting edge of the cutting insert.

### Brief Description of Drawings

Fig. 1 is a perspective view of a cutting tool in which cartridges are mounted on a holder according to an embodiment of the present invention.
Fig. 2 is a perspective view of a holder according to an embodiment of the present invention.
Fig. 3 is a schematic front view of a holder that illustrates coolant flow paths provided in the holder.
Fig. 4 is a schematic perspective view of a holder that illustrates coolant flow paths provided in the holder.
Fig. 5 is a perspective view of a cartridge on which a cutting insert is mounted.
Fig. 6 is a schematic perspective view of a cartridge which illustrates inner flow paths of the cartridge.
Fig. 7 is a perspective view of a cartridge which is the same as the cartridge illustrated in Fig. 5 and on which a cutting insert differing from the cutting insert illustrated in Fig. 5 is mounted.
Fig. 8 is a perspective view of a cartridge which is different from the cartridge illustrated in Fig. 5 and on which a cutting insert differing from the cutting inserts illustrated in Figs. 5 and 6 is mounted.

### Detailed Description

Embodiments of the present invention will now be described in detail below, with reference to the drawings.

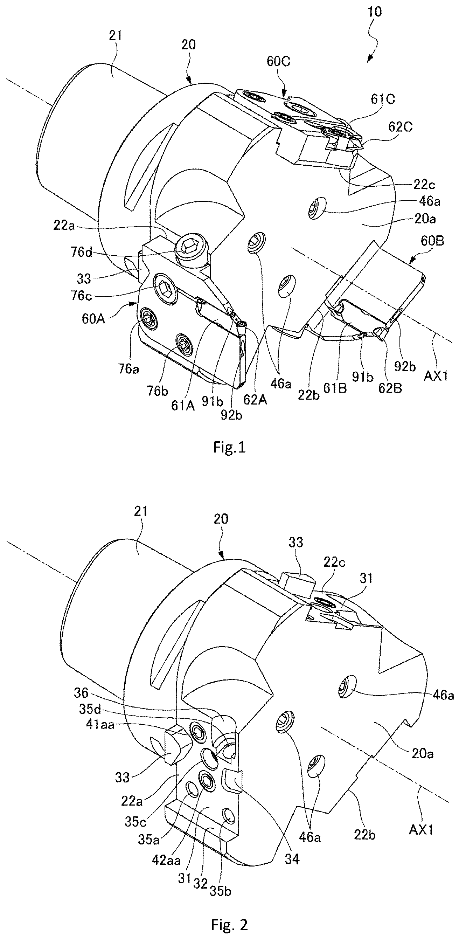

As shown in Figs. 1 and 2, a cutting tool 10 according to an embodiment of the present invention comprises a holder 20 and a plurality of cartridges 60A, 60B and 60C. The cartridges 60A, 60B and 60C respectively hold cutting inserts 61A, 61B and 61C. The cutting tool 10 is, for example, a turning tool for performing, by the cutting inserts 61A, 61B and 61C, cutting on a rotating workpiece (not shown). This example refers to a case in which the holder 20 comprises the three cartridges 60A, 60B and 60C; however, the number of cartridges is not limited to three, and such number may be two, or four or more.

The holder 20 is the largest member among the members of the cutting tool 10 in terms of volume, and may be made of, for example, steel. The holder 20 is formed in a substantially cylindrical shape. The holder 20 has a connecting part 21. The connecting part 21 is a portion of the holder 20 which is located on one side along a longitudinal direction thereof, and the connecting part 21 is attached to a machine tool (not shown).

The holder 20 has a plurality of mounting parts 22a, 22b and 22c. In this example, the holder 20 has the three mounting parts 22a, 22b and 22c. The cartridges 60A, 60B and 60C are respectively mounted on the mounting parts 22a, 22b and 22c. The mounting parts 22a, 22b and 22c are, in a front view of the holder 20, arranged at point symmetric positions around a central axis AX1. As described above, the mounting parts 22a, 22b and 22c are provided at point symmetric positions around the central axis AX1. Thus, by rotating the holder 20 around the central axis AX1, any of the cutting inserts 61A, 61B and 61C for the cartridges 60A, 60B and 60C mounted on the mounting parts 22a, 22b and 22c can be easily aligned with a workpiece.

The mounting parts 22a, 22b and 22c of the holder 20 are shaped so as to match the cartridges 60A, 60B and 60C to be mounted. In this example, the cartridges 60A and 60B of the same type are mounted on the mounting parts 22a and 22b, and the cartridge 61C of a type differing from the type of the cartridges 60A and 60B is mounted on the mounting part 22c. Further, the cutting inserts 61A, 61B and 61C differing from one another are respectively mounted on the cartridges 60A, 60B and 60C. Thus, in this example, the cartridges 60A and 60B of the same type are used for the different cutting inserts 61A and 61B. However, different cartridges 60A, 60B and 60C may be used for different cutting inserts 61A, 61B and 61C on a dedicated basis. Alternatively, cartridges 60A, 60B and 60C of the same type may be mounted on the mounting parts 22a, 22b and 22c.

Each mounting part 22a, 22b, 22c has a mounting surface 31, a contact wall 32, a positioning protrusion 33 and a clearance recess 34. The contact surface 31 refers to a plane which extends along the central axis AX1 and is perpendicular to a normal passing through the central axis AX1. The contact wall 32 is formed along an edge of the mounting surface 31. The positioning protrusion 33 is formed in a rear edge of the mounting surface 31. The flank recess 34 is a recess that serves as a clearance for each cutting insert 61A, 61B held by each cartridge 60A, 60B when each cartridge 60A, 60B is mounted on each mounting part 22a, 22b, and further, the flank recess 34 is formed in a front edge of the mounting surface 31.

Each mounting part 22a, 22b and 22c has a plurality of screw holes 35a, 35b, 35c and 35d. The holes 35a, 35b and 35c are formed in the mounting surface 31 of each mounting part 22a, 22b, 22c. In each mounting part 22a, 22b, 22c, a recess 36 is formed in an edge of the mounting surface 31 which is opposite to the contact wall 32, and the screw hole 35d is formed in the recess 36. The screw hole 35d is inclined, toward the contact wall 32, so as to be closer to the central axis AX1 with respect to the mounting surface 31.

The mounting part 22a has two openings 41aa and 42aa. The mounting part 22b has two openings 41ba and 42ba. The mounting part 22c has two openings 41ca and 42ca. Each two openings 41aa, 42aa, 41ba, 42ba, 41ca, 42ca are formed in the mounting surface 31 of each mounting part 22a, 22b, 22c.

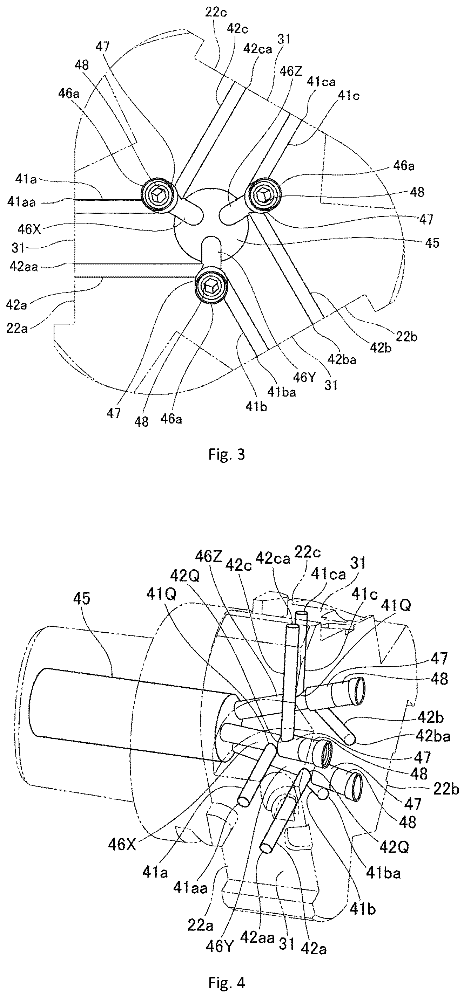

As shown in Figs. 3 and 4, the holder 20 has two types of coolant flow paths 41a, 41b, 41c, 42a, 42b and 42c. The coolant flow paths 41a, 41b and 41c are flow paths for rake surfaces, while the coolant paths 42a, 42b and 42c are flow paths for flanks.

The holder 20 has a supply flow path 45 and three introduction flow paths 46X, 46Y and 46Z. The supply flow path 45 is formed in the center of the holder 20, and the introduction flow paths 46X, 46Y and 46Z are in communication with the supply flow path 45 by being connected to a front end thereof. The introduction flow paths 46X, 46Y and 46Z are inclined so as to gradually be farther away from the central axis AX1 in a direction heading toward a leading end of the holder 20, and an end 46a of each of the introduction flow paths 46X, 46Y, 46Z extends to a leading end surface 20a of the holder 20. As a result, the introduction flow paths 46X, 46Y and 46Z can be easily formed with a drilling tool such as a drill, from the leading end surface 20a side of the holder 20. In this example, each introduction flow path 46X, 46Y, 46Z extends linearly throughout the length; however, a portion thereof which extends in a linear manner may only be at least a leading end side portion of each introduction flow path 46X, 46Y, 46Z, and more specifically may only be a screw 47 in which a screw member 48 (described below), moves.

The coolant flow paths 41a and 42c branch off from the introduction flow path 46X. The coolant flow paths 41a and 42c extend toward the respective mounting surfaces 31 of the mounting parts 22a and 22c, which are adjacent to each other, and the coolant flow path 41a makes a right angle with the mounting surface 31 of the mounting part 22a, while the coolant flow path 42c makes a right angle with the mounting surface 31 of the mounting part 22c.

The coolant flow paths 41b and 42a branch off from the introduction flow path 46Y. The coolant flow paths 41b and 42a extend toward the respective mounting surfaces 31 of the mounting parts 22b and 22a, which are adjacent to each other, and the coolant flow path 41b makes a right angle with the mounting surface 31 of the mounting part 22b, while the coolant flow path 42a makes a right angle with the mounting surface 31 of the mounting part 22a.

The coolant flow paths 41c and 42b branch off from the introduction flow path 46Z. The coolant flow paths 41c and 42b extend toward the respective mounting surfaces 31 of the mounting parts 22c and 22b, which are adjacent to each other, and the coolant flow path 41c makes a right angle with the mounting surface 31 of the mounting part 22c, while the coolant flow path 42b makes a right angle with the mounting surface 31 of the mounting part 22b.

Here, when a configuration is intended to be made in which the two types of each coolant flow path 41a, 41b, 41c and each coolant flow path 42a, 42b, 42c, which branch off from each introduction flow path 46X, 46Y, 46Z, each make a right angle with the mounting surface 31 of each mounting part 22a, 22b, 22c, a bent portion will be formed in either of the two types of coolant flow paths. Thus, when either of each coolant flow path 41a, 41b, 41c or each coolant flow path 42a, 42b, 42c, which has the bent portion, is formed, it is necessary to form a flow path which makes a right angle with the mounting surface 31 via a drilling tool such as a drill, and it is further necessary to form a flow path that causes the above flow path which makes a right angle to communicate with each introduction flow path 46X, 46Y, 46Z, and this leads to a complicated drilling process.

Meanwhile, in this example, one (rake surface flow path), out of the one type of coolant flow path 41a, 41b and 41c, and the other (flank flow path), out of the other type of coolant flow path 42a, 42b and 42c, which branch off from each introduction flow path 46X, 46Y, 46Z, are configured so as to extend to the adjacent mounting parts out of the mounting parts 22a, 22b and 22c, whereby each coolant flow path 41a, 41b, 41c, 42a, 42b, 42c can be configured so as to make a right angle with the mounting surface 31 of each mounting part 22a, 22b, 22c without providing any bent portion. As a result, each flow path 41a, 41b, 41c, 42a, 42b, 42c can be easily formed, with a drilling tool such as a drill, from the mounting surfaces 31 of each mounting part 22a, 22b, 22c.

Branch positions 41Q and 42Q of each coolant flow path 41a, 41b, 41c and each coolant flow path 42a, 42b, 42c with respect to each introduction flow path 46X, 46Y, 46Z are in different positions in an axial direction of each introduction flow path 46X, 46Y, 46Z. More specifically, the branch position 42Q of each coolant flow path 42a, 42b, 42c with respect to each introduction flow paths 46X, 46Y, 46Z is closer to the end 46a of each introduction flow path 46X, 46Y, 46Z than the branch position 41Q of each coolant flow path 41a, 41b, 41c with respect to each introduction flow path 46X, 46Y, 46Z.

A part of each introduction flow path 46X, 46Y, 46Z which ranges from the branch position 42Q of each coolant flow path 42a, 42b, 42c to the end 46a is defined as an internal thread 47, into which a screw member 48 is threaded from the end 46a of each introduction flow path 46X, 46Y, 46Z. For example, a hollow set screw may be used as the screw member 48. The screw member 48 closes, on the end 46a side, each introduction flow path 46X, 46Y, 46Z.

In the holder 20, coolant is fed into the supply flow path 45. The coolant, which is fed into the supply flow path 45, is split into partial flows so as to flow through the introduction flow paths 46X, 46Y and 46Z, and further, the partial flows that flow through the introduction flow paths 46X, 46Y and 46Z are split into partial flows so as to flow through the coolant flow paths 41a, 41b, 41c, 42a, 42b and 42c. As a result, the coolant is supplied to each mounting part 22a, 22b, 22c through each coolant flow path 41a, 41b, 41c, 42a, 42b, 42c, so that the coolant can be fed into each cartridge 60A, 60B, 60C, which is mounted on each mounting part 22a, 22b, 22c. The fluid to be supplied to cutting locations is not limited to the coolant, and various types of lubricants and cooling agents may be used, or mist or air may alternatively be supplied.

The supply flow path 45 is a flow path whose cross-sectional area is larger than that of each introduction flow path 46X, 46Y, 46Z, and further, each introduction flow path 46X, 46Y, 46Z is a flow path whose cross-sectional area is larger than that of each coolant flow path 41a, 41b, 41c, 42a, 42b, 42c. That is, the supply flow path 45, each introduction flow path 46X, 46Y, 46Z and each coolant flow path 41a, 41b, 41c, 42a, 42b, 42c, which are arranged in the order of the flow of coolant, have smaller cross-sectional areas in the order of arrangement. Thus, when coolant flows from the supply flow path 45 to the introduction flow path 46X, 46Y and 46Z and to the coolant flow paths 41a, 41b, 41c, 42a, 42b and 42c, the coolant can be fed into the cartridge 60A, 60B and 60C mounted on the mounting parts 22a, 22b and 22c while being prevented from suffering pressure loss.

In the holder 20, the screw member 80, which is screwed into the internal thread 47 of each introduction flow path 46X, 46Y, 46Z so as to close the end 46a, is moved back and forth by being rotated by a tool. The moving of the internal thread 47 back and forth allows the screw member 48 to serve as a valve that adjusts the flow-path cross-sectional area of each coolant flow path 42a, 42b, 42c, which is a flank flow path, with respect to the branch position 42Q. More specifically, after the screw member 48 screwed into the internal thread 47 has reached the branch position 42Q of each coolant flow path 42a, 42b, 42c, the screw member 48 gradually decreases the flow-path cross-sectional area of each coolant flow path 42a, 42b, 42c with respect to the branch position 42Q, and each coolant flow path 42a, 42b, 42c is eventually brought into a fully closed state. Further, when the screw member 48 is loosened from a state in which each coolant flow path 42a, 42b, 42c has been closed by the screw member 48, the flow-path cross-sectional area of each coolant flow path 42a, 42b, 42c with respect to the branch position 42Q is gradually increased, and each coolant flow path 42a, 42b, 42c is eventually brought into a fully open state. In this way, in the holder 20, the moving of the screw member 48 back and forth as appropriate allows the flow-path cross-sectional area of each coolant flow path 42a, 42b, 42c, which is a flank flow path, with respect to the branch position 42Q to be either increased or decreased and also allows each coolant flow path 42a, 42b, 42c to be either opened or closed. That is, the moving of the screw member 48 back and forth makes it possible to adjust not only the coolant flow rate of each coolant flow path 42a, 42b, 42c but also the coolant flow rate of each coolant flow path 41a, 41b, 41c.

A part of each introduction flow path 46X, 46Y, 46Z in this example that ranges from the branch position 42Q of each coolant flow path 42a, 42b, 42c to the end 46a is defined as the internal thread 47. It is also possible to employ a variation in which: the internal thread 47 is extended so as to reach the branch position 41Q of each coolant flow path 41a, 41b, 41, which is a rake surface flow path; and the flow-path cross-sectional area of each coolant flow path 41a, 41b, 41c with respect to the branch position 41Q is either increased or decreased by moving the screw member 48 back and forth. It should be noted, however, that, in this variation, in order to either increase or decrease the flow-path cross-sectional area of each coolant flow path 41a, 41b, 41c, which is a rake surface flow path, with respect to the branch position 41Q, each coolant flow path 42a, 42b, 42c, which is a flank flow path, is fully closed in the previous step, and this may lead to the loss of the merit of providing the two types of each coolant flow path 41a, 41b, 41c and each coolant flow path 42a, 42b, 42c. Thus, this example is more preferable than the variation.

The branch position 42Q of each coolant flow path 42a, 42b, 42c with respect to each introduction flow path 46X, 46Y, 46Z in this example is closer to the end 46a of each introduction flow path 46X, 46Y, 46Z than the branch position 41Q of each coolant flow path 41a, 41b, 41c with respect to each introduction flow path 46X, 46Y, 46Z. It is also possible to employ a variation in which the branch position 42Q and the branch position 41Q are reversed in terms of the positional relationship. In this variation, the moving of the screw member 48 back and forth allows the flow rate of coolant through each coolant flow path 41a, 41b, 41c, which is a rake surface flow path, to be decreased, and also allows the flow rate of coolant through each coolant flow path 42a, 42b, 42c to be increased, which is a flank flow path. However, a greater cooling effect is, in general, desired to be achieved on the rake surface side than on the flank side. Thus, this example is more preferable than the variation.

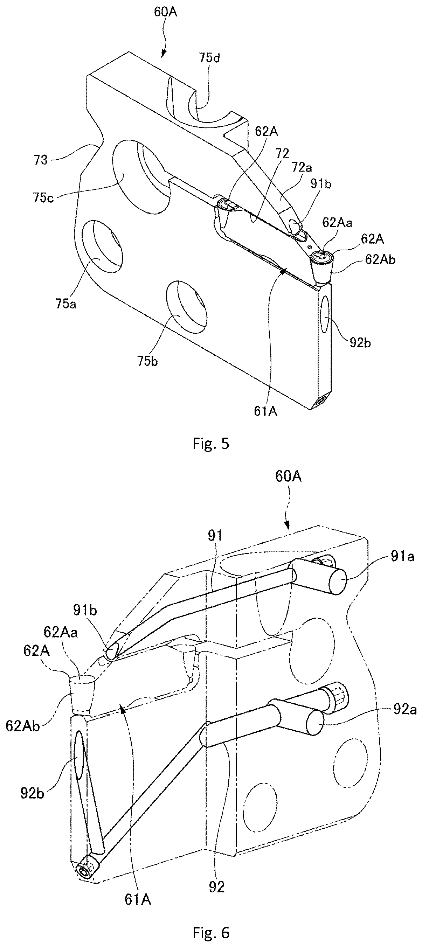

As shown in Fig. 5, the cartridge 60A is formed in a plate shape. The cartridge 60A has an insert pocket 72 on its leading end side, and the cutting insert 61A is mounted on the insert pocket 72. The cartridge 60A further has a positioning recess 73 on its base end side. Further, in a state where the cartridge 60A is arranged on the mounting part 22a of the holder 20, a lower edge of the cartridge 60A is in contact with the contact wall 32 of the mounting part 22a, and the positioning recess 73 is engaged with the positioning protrusion 33 of the mounting part 22a. Thus, the cartridge 60A is arranged on the mounting part 22a while being positioned.

The cartridge 60A has a plurality of fastening holes 75a, 75b, 75c and 75d, which consist of countersunk holes. The fastening holes 75a, 75b and 75c are each formed so as to penetrate front and back surfaces of the cartridge 60A and are formed in positions corresponding to the screw holes 35a, 35b and 35c formed in the mounting parts 22a, 22b, 22c of the holder 20. The fastening hole 75d is formed in a position corresponding to the screw hole 35d formed in the recess 36 of the edge that is opposite to the contact wall 32 of the mounting surface 31.

With the cartridge 60A being arranged on the mounting part 22a of the holder 20, screws 76a, 76b, 76c and 76d are inserted into the fastening holes 75a, 75b, 75c and 75d and then screwed into the screw holes 35a, 35b, 35c and 35d, whereby the cartridge 60A is fixed to the mounting part 22a (see Fig. 1). Further, the screw 76d is inserted into the fastening hole 75d and then screwed into the screw hole 35d, whereby an upper piece 72 of the insert pocket 72 is pressed against the cutting insert 61A. As a result, the cutting insert 61A is firmly fixed to the insert pocket 72.

The cutting insert 61A held in the insert pocket 72 of the cartridge 60A is used in performing, for example, profiling or undercutting on a workpiece. The cutting insert 61A comprises, at both ends thereof, round cutting edges 62A which each have a rake surface 62Aa and a flank 62Ab, and the cutting insert 61A is held in the insert pocket 72 such that either one of the cutting edges 62A is arranged on the leading end side of the cartridge 60A.

As shown in Fig. 6, the cartridge 60A has inner flow paths 91 and 92. The inner flow paths 91 and 92 respectively have openings 91a and 92a formed in a surface of the cartridge 60A which comes into contact with the mounting surface 31 of the mounting part 22a. The openings 91a and 92a are arranged in positions corresponding to the openings 41aa and 42aa of the coolant flow paths 41a and 42a formed in the mounting surface 31. As a result, by mounting the cartridge 60A on the mounting part 22a of the holder 20, the coolant flow paths 41a and 42a of the holder 20 communicate with the inner flow paths 91 and 92 of the cartridge 60A.

The inner flow paths 91 and 92 respectively have discharge ports 91a and 92b which pass through the cartridge 60A and which are opened in the leading end of the cartridge 60A. The discharge port 91b of the inner flow path 91 is opened, toward the cutting edge 62A, close to the rake surface 62Aa for a machining location of a workpiece with the cutting edge 62A of the cutting insert 61A. The discharge port 92b of the inner flow path 92 is opened close to the flank 62Ab for a machining location of a workpiece with the cutting edge 62A of the cutting insert 61A.

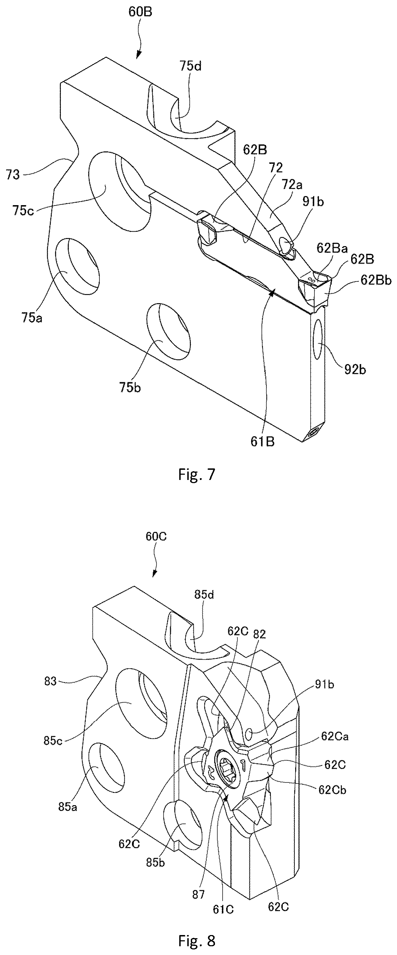

As shown in Fig. 7, the cartridge 60B has the same configuration and the same shape as those of the cartridge 60A, and the cartridge 60B holds the cutting insert 61B. Since the cartridge 60B has the same configuration and the same shape as those of the cartridge 60A, the other components will be denoted with like reference numerals for the cartridge 60A, and redundant descriptions will be omitted.

The cutting insert 61B held in the insert pocket 72 of the cartridge 60B is used in performing, for example, grooving or parting on a workpiece. The cutting insert 61B comprises, in both ends thereof, square cutting edges 62B which each have a rake surface 62Ba and a flank 62Bb, and the cutting insert 61B is held in the insert pocket 72 such that either one of the cutting edges 62B is arranged on a leading end side of the cartridge 60B.

The cartridge 60B also has an inner flow path 91, which is opened close to the rake surface 62Ba of the cutting insert 61B and further has an inner flow path 92, which is opened close to the flank 62Bb of the cutting insert 61B. In the case of the cartridge 60B as well, by mounting the cartridge 60B on the mounting part 22b of the holder 20, the coolant flow paths 41a and 42a of the holder 20 communicate with the inner flow paths 91 and 92 of the cartridge 60B.

As shown in Fig. 8, the cartridge 60C is formed in a plate shape. The cartridge 60C has an insert pocket 82 in a recessed shape on its leading end side, and the cutting insert 61C is mounted with respect to the insert pocket 82. The cartridge 60C further has a positioning recess 83 on its base end side. With the cartridge 60C being arranged on the mounting part 22c of the holder 20, a lower edge of the cartridge 60C is in contact with the contact wall 32 of the mounting part 22c, and the positioning protrusion 33 of the mounting part 22c is engaged with the positioning recess 83. As a result, the cartridge 60C is arranged on the mounting part 22c while being positioned.

The cartridge 60C has a plurality of fastening holes 85a, 85b, 85c and 85d, which consist of countersunk holes. The fastening holes 85a, 85b and 85c are each formed so as to penetrate front and back surfaces of the cartridge 60C and are formed in positions corresponding to the screw holes 35a, 35b and 35c formed in the mounting part 22c of the holder 20. The fastening hole 85d is formed in a position corresponding to the screw hole 35d formed in the recess 36 of the edge that is opposite to the contact wall 32 of the mounting surface 31.

With the cartridge 60C being arranged on the mounting part 22c of the holder 20, the screws 76a, 76b, 76c and 76d are inserted into the fastening holes 85a, 85b, 85c and 85d and then screwed into the screw holes 35a, 35b, 35c and 35d, whereby the cartridge 60C is fixed to the mounting part 22c.

The cutting insert 61C held in the insert pocket 82 of the cartridge 60C is used in performing, for example, profiling, undercutting, grooving, parting or threading on a workpiece. The cutting insert 61C comprises, in its periphery, four cutting edges 62C which each have a rake surface 62Ca and a flank 62Cb. The cutting edges 62C are arranged at regular intervals in a circumferential direction, and the cutting insert 61C is held in the insert pocket 82 such that either one of the cutting edges 62C is arranged on the leading end side of the cartridge 60C. With the cutting insert 61C being fitted into the insert pocket 82, a center part of the cutting insert 61C is fixed to the cartridge 60C by way of a fastening screw 87. The cutting edges 62C of the cutting insert 61C used here have different shapes depending on the machining type for a workpiece.

Different from the cartridges 60A and 60B, the cartridge 60C only has an inner flow path (hereinafter referred to as the inner flow path 91 for the purposes of description) that is opened, toward the cutting edge 62C, close to the rake surface 62Ca of the cutting insert 61C so as to form a discharge port 91b. Thus, when the cartridge 60C is mounted on the mounting part 22c of the holder 20, the coolant flow path 41c, being one of the coolant flow paths of the holder 20, communicates with the inner flow path 91 of the cartridge 60C, and the opening 42ca of the coolant flow path 42c is closed by the cartridge 60C. The opening 42ca can be closed by a screw or the like; however, in this example, the opening 42ca is closed by a side surface (surface facing the contact surface 31 of the mounting part 22c) of the cartridge 60C. Thus, the opening 42c may be kept open, and this prevents the number of components from being increased.

As can be seen from the above, the cutting tool 10 of the present embodiment comprises the plurality of mounting parts 22a, 22b and 22c which are respectively mounted with the cartridges 60A, 60B and 60C, which respectively hold the cutting inserts 61A, 61B and 61C. Namely, the cutting inserts 61A, 61B and 61C of different types can be arranged on the mounting parts 22a, 22b and 22c (first step), and a workpiece is machined by one cutting insert (first type of cutting insert), out of the cutting inserts 61A, 61B and 61C (second step), then, by rotating the holder 20 around the central axis thereof by 120 degrees, one cutting insert (cutting insert of a type differing from the first type), out of the remaining two cutting inserts, is positioned in a location where the cutting insert is used for machining (third step), the cutting insert is used to machine the workpiece (fourth step), and further, by rotating the holder 20 around the central axis thereof by 120 degrees, the remaining one cutting insert is positioned in a location where the cutting insert is used for machining, whereby the workpiece can be machined.

Accordingly, various types of machining can be performed on a workpiece by means of the cutting inserts 61A, 61B and 61C held by the cartridges 60A, 60B and 60C mounted on the plurality of mounting parts 22a, 22b and 22c of the holder 20. That is, a plurality of types of cutting inserts 61A, 61B and 61C can be collectively arranged on the holder 20, and this can reduce a tool exchange period (non-cutting period) during machining. Further, even in a case where any of the cartridges 60A, 60B and 60C is damaged, it is sufficient for only the damaged cartridge to be replaced, which is excellent in terms of economic efficiency.

The holder 20 according to the present embodiment has the two types of coolant flow paths 41a, 41b, 41c, 42a, 42b and 42c, which are opened in the mounting parts 22a, 22b and 22c. As a result, by mounting the cartridges 60A and 60B on the mounting parts 22a and 22b, the coolant flow paths 41a, 41b, 42a, 42b communicate with the inner flow path 91 and 92 of the cartridge 60A and the inner flow paths 91 and 92 of the cartridge 60B, and by mounting the cartridge 60C on the mounting part 22c, the coolant flow path 41c communicates with the inner flow path 91 of the cartridge 60C.

Accordingly, with the cartridge 60A mounted on the mounting part 22a, coolant can be supplied from the coolant flow paths 41a and 42a of the holder 20 to the inner flow paths 91 and 92, and the coolant can be discharged through the discharge ports 91b and 92b, which are opened respectively close to the rake surface 62Aa and the flank 62Ab with respect to a machining location of a workpiece with the cutting edge 62A. As a result, the machining location of the workpiece with the cutting edge 62A of the cutting insert 61A can be subjected to cooling and lubrication by smoothly supplying the coolant to such machining location.

Similarly, with the cartridge 60B mounted on the mounting part 22b, coolant can be supplied from the coolant flow paths 41b and 42b of the holder 20 to the inner flow paths 91 and 92, and the coolant can be discharged through the discharge ports 91b and 92b, which are opened respectively close to the rake surface 62Ba and the flank 62Bb with respect to a machining location of a workpiece with the cutting edge 62B. As a result, the machining location of the workpiece with the cutting edge 62B of the cutting insert 61B can be subjected to cooling and lubrication by smoothly supplying the coolant to such machining location.

Further, with the cartridge 60C mounted on the mounting part 22c, coolant can be supplied from the coolant flow path 41c of the holder 20 to the inner flow path 91, and the coolant can be discharged through the discharge port 91c, which is opened close to the rake surface 62c with respect to a machining location of a workpiece with the cutting edge 62C. As a result, the machining location of the workpiece with the cutting edge 62C of the cutting insert 61C can be subjected to cooling and lubrication by smoothly supplying the coolant to such machining location.

Thus, according to the present embodiment, coolant can be smoothly supplied to a machining location of a workpiece, and this allows the tool life to be prolonged.

In addition, in the holder 20, the two types of each coolant flow path 41a, 41b, 41c and each coolant flow path 42a, 42b, 42c branch off from each introduction flow path 46X, 46Y, 46Z, and the branch positions 41Q and 42Q of the two types of each coolant flow path 41a, 41b, 41c and each coolant flow path 42a, 42b, 42c with respect to each introduction flow path 46X, 46Y, 46Z are in different positions in the axial direction of each introduction flow path 46X, 46Y, 46Z. In this way, by configuring the branch positions 41Q and 42Q of the two types of each coolant flow path 41a, 41b, 41c and each coolant flow path 42a, 42b, 42c with respect to each introduction flow path 46X, 46Y, 46Z so as to be in different positions in the axial direction of each introduction flow path 46X, 46Y, 46Z, the diameter of each introduction flow path 46X, 46Y, 46Z can be prevented from being increased, whereby the holder 20 can be prevented from being increased in size.

In the holder 20, the moving of the screw member 48 provided in the end 46a of each introduction flow path 46X, 46Y, 46Z back and forth makes it possible to adjust the flow-path cross-sectional area of each coolant flow path 42a, 42b, 42c, which is a flank flow path, with respect to the branch position 42Q. Accordingly, the moving of the screw member 48 back and forth as appropriate makes it possible to increase or decrease the flow-path cross-sectional area of each coolant flow path 42a, 42b, 42c, which is a flank flow path, with respect to the branch position 42Q; alternatively, each coolant flow path 42a, 42b, 42c can be either opened or closed.

For example, when the screw member 48 in the introduction flow path 46Y is moved so as to close the coolant flow path 42a, coolant is supplied only to a part of a cutting location of a workpiece with the cutting insert 61A which is close to the rake surface 62Aa, whereby such part can be cooled and lubricated. When the screw member 48 in the introduction flow path 46Z is moved so as to close the coolant flow path 42b, coolant is supplied only to a part of a cutting location of a workpiece with the cutting insert 61B which is close to the rake surface 62Ba, whereby such part can be cooled and lubricated. When the screw member 48 in the introduction flow path 46X is moved so as to close the coolant flow path 42c, coolant is supplied only to a part of a cutting location of a workpiece with the cutting insert 61C which is close to the rake surface 62Ca, whereby such part can be cooled and lubricated.

The present disclosure is not limited to the above-described specific examples, and design modifications that are added to such specific examples as appropriate by a person skilled in the art are also encompassed in the scope of the present disclosure, as long as such design modifications include the characteristics of the present disclosure. Each element and its arrangement, condition, shape, etc. included in each of the above-described specific examples is not particularly limited to those described as examples, and they may be altered as appropriate. Further, regarding each of the elements included in each of the above-described specific examples, different combinations thereof may be employed, as long as no technical contradiction occurs.

The present invention provides a holder, a cutting tool and a machining method that allow coolant to be smoothly supplied to a machining location of a workpiece.

## Claims

1. A holder for a cutting tool, the holder comprising:
a plurality of mounting parts each of which is mounted with a cartridge that holds a cutting insert; and
a coolant flow path that is opened in at least one mounting part.

2. The holder according to claim 1, wherein, in a front view, the plurality of mounting parts are arranged at point symmetric positions.

3. The holder according to claim 1 or 2, comprising at least two coolant flow paths that are opened in at least one mounting part.

4. The holder according to any one of claims 1 to 3, wherein:
two coolant paths branch off from one introduction flow path; and
branch positions of the two coolant flow paths with respect to the introduction flow path are in different positions in an axial direction of the introduction flow path.

5. The holder according to claim 4, wherein the two coolant flow paths that branch off from the introduction flow path are opened in the mounting parts that are adjacent from each other.

6. The holder according to any one of claims 1 to 5, wherein two coolant flow paths are provided for each of the plurality of mounting parts.

7. The holder according to any one of claims 1 to 6, wherein the, preferably one of the two, coolant flow paths is a rake surface flow path which is opened on a rake surface side of a cutting edge of the cutting insert and which communicates with an inner flow path of the cartridge.

8. The holder according to any one of claims 1 to 7, wherein the, preferably the other of the two, coolant flow paths is a flank flow path which is opened on a flank side of a cutting edge of the cutting insert and which communicates with an inner flow path of the cartridge.

9. The holder according to any one of claims 3 to 8, comprising an adjustment mechanism that is capable of adjusting coolant flow rates of the rake surface flow path and the flank flow path.

10. A cutting tool comprising:
the holder according to any one of claims 1 to 9; and
a cartridge that holds a cutting insert and that is mounted on the mounting part of the holder,
wherein the cartridge has an inner flow path which is opened close to the cutting insert and which the coolant flow path communicates with in a state where the cartridge is mounted on the mounting part.

11. A machining method with a cutting tool comprising:
a cartridge that holds a cutting insert; and
a holder, preferably the holder of any one of claims 1 to 9, that has: a plurality of mounting parts each of which is mounted with the cartridge; and a coolant flow path that is opened in at least one mounting part, the holder being attached to a machine tool, the machining method comprising:
a first step of arranging at least two types of cutting inserts with respect to the mounting parts;
a second step of machining a workpiece under rotation with a first type of cutting insert;
a third step of rotating the holder around a central axis thereof by a predetermined angle and thereby positioning the holder at a position regarding which a cutting insert of a type differing from the first type is used for machining; and
a fourth step of machining the workpiece with the cutting insert of a type differing from the first type.

12. The machining method according to claim 11, wherein, in the first step, different types of cutting inserts are respectively arranged for the mounting parts.

13. The machining method according to claim 11 or 12, wherein the cartridge has an inner flow path, and a discharge port of the inner flow path is opened toward a cutting edge of the cutting insert.
